# FASCICULE DE BREVET EUROPEEN

(11) **EP 2 089 855 B1**
(45) Date de publication et mention de la délivrance du brevet: **21.07.2010**
(21) Numéro de dépôt: 07871784.0
(22) Date de dépôt: 04.12.2007
(51) Int. Cl.: G06T 17/20

(54) **PROCEDE DE SIMULATION DU COMPORTEMENT D'UN ENSEMBLE OSSEUX ARTICULE**
VERFAHREN ZUR SIMULATION DES VERHALTENS EINER GELENK-KNOCHEN-BAUGRUPPE
METHOD FOR SIMULATING THE BEHAVIOUR OF AN ARTICULATED BONE ASSEMBLY

(30) Priorité: 07.12.2006 FR 0610671
(43) Date de publication de la demande: 19.08.2009
(73) Titulaire: Ecole Nationale Supérieure D'Arts et Métiers ENSAM, 75013 Paris (FR); Centre National de la Recherche Scientifique, 75016 Paris (FR)
(72) Inventeur: SKALLI, Wafa, F-75013 Paris (FR); LAFON, Yoann, F-81000 Albi (FR); LAFAGE, Virginie, F-82130 Lafrancaise (FR); STEIB, Jean-Paul, F-67100 Strasbourg (FR); DUBOUSSET, Jean, F-75013 Paris (FR); LAVASTE, François, F-91240 Saint-michel-sur-orge (FR)
(74) Mandataire: Robert, Jean-Pierre
(86) Numéro de dépôt international: PCT/FR2007/001982
(87) Numéro de publication internationale: WO 2008/081105

(56) Documents cités:
- WO-A-2004/061721
- LAFAGE V ET AL: "3D finite element simulation of Cotrel-Dubousset correction." COMPUTER AIDED SURGERY : OFFICIAL JOURNAL OF THE INTERNATIONAL SOCIETY FOR COMPUTER AIDED SURGERY 2004, vol. 9, no. 1-2, 2004, pages 17-25, XP009082795
- LAFAGE V ET AL: "FINITE ELEMENT SIMULATION OF VARIOUS STRATEGIES FOR CD CORRECTION" STUDIES IN HEALTH TECHNOLOGY AND INFORMATICS, I O S PRESS, AMSTERDAM, NL, vol. 91, 2002, pages 428-432, XP009082796
- AUBIN C E ET AL: "GEOMETRICAL MODELING OF THE SPINE AND THE THORAX FOR THE BIOMECHANICAL ANALYSIS OF SCOLIOTIC DEFORMITIES USING THE FINITE ELEMENT METHOD MODELISATION GEOMETRIQUE DU RACHIS ET DU THORAX POUR L'ANALYSE BIOMECANIQUE PAR ELEMENTS FINIS DES DEFORMATIONS" ANNALES DE CHIRURGIE, PARIS, FR, vol. 49, no. 8, 1995, pages 749-761, XP009082512
- PÉRIÉ D ET AL: "Personalized biomechanical modeling of Boston brace treatment in idiopathic scoliosis." STUDIES IN HEALTH TECHNOLOGY AND INFORMATICS 2002, vol. 91, 2002, pages 393-396, XP009082792
- LAVASTE F ET AL: "Three-dimensional geometrical and mechanical modelling of the lumbar spine." JOURNAL OF BIOMECHANICS OCT 1992, vol. 25, no. 10, octobre 1992 (1992-10), pages 1153-1164, XP002431258

## Description

La présente invention concerne un procédé de simulation du comportement d'un ensemble osseux articulé tel, par exemple que la colonne vertébrale d'un sujet lorsque cet ensemble est soumis à des efforts nés d'une chirurgie correctrice, réparatrice ou prothétique.

La chirurgie assistée par ordinateur, notamment dans le cas de la chirurgie orthopédique, comporte une première étape : celle de modéliser la partie du sujet sur laquelle portera l'intervention. Dans le cas de l'assistance du geste chirurgical, cette modélisation se limite à une représentation géométrique en trois dimensions permettant le guidage (la navigation) des ancillaires de pose de prothèse. Dans le cas d'une assistance plus poussée apportant au chirurgien une aide à la décision quant à la stratégie opératoire à adopter, la modélisation de l'ensemble osseux doit être beaucoup plus complète et notamment comporter des données représentant le comportement mécanique de l'ensemble pour que le modèle se prête à une simulation de son comportement. Cette modélisation qui, le plus souvent applique la numérisation par éléments finis, doit représenter le plus fidèlement possible les caractéristiques singulières de chaque sujet.

Il convient également de modéliser l'implant ou la prothèse qui viendra collaborer avec le modèle anatomique du sujet. Cette modélisation est beaucoup plus simple. Cette collaboration se traduit par un modèle numérique global qui dépend du type d'implant et de la stratégie opératoire choisie par le chirurgien. Un déplacement du modèle de l'implant par rapport au modèle numérique personnalisé du sujet se traduit par l'obtention d'une forme nouvelle des deux modèles associés. En d'autres termes, la collaboration peut se réduire à un système de forces interagissant sur le modèle de l'implant et le modèle de l'ensemble osseux du sujet.

En faisant varier les paramètres de cette collaboration des deux modèles numériques on peut simuler un ou plusieurs comportements du sujet en fonction des choix de la stratégie opératoire effectués par le chirurgien.

### ARRIERE PLAN DE L'INVENTION

Le document WO 2004/061721 illustre un état de la technique dans lequel s'inscrit l'invention. Ce document décrit la réalisation d'un modèle numérique personnalisé d'un patient à la fois sur le plan géométrique et sur le plan mécanique pour ensuite l'utiliser dans un procédé de simulation d'une stratégie opératoire afin d'en illustrer en préopératoire le résultat prévisible donnant ainsi au chirurgien les moyens d'apprécier les effets d'un geste chirurgical sur l'équilibre final du patient et sur les contraintes internes dasn l'implant et dans les structures anatomiques.

Dans l'étape de construction du modèle du sujet, il existe une phase de réalisation d'un modèle tridimensionnel en fonction de radiographies calibrées du sujet, c'est-à-dire de radiographies rapportées à un repère connu ou d'image tomographiques du sujet ou de tout autre donnée convenable pour une reconstitution tridimensionnelle de l'ensemble osseux personnalisé. Cette phase est complétée par l'affectation à cette reconstitution géométrique de caractéristiques mécaniques générales résultant de modèles connus formant une sorte de base standard applicable à toutes les géométries reconstruites.

Le document cité ci-dessus propose un procédé pour personnaliser ces caractéristiques mécaniques du modèle déjà personnalisé géométriquement. A partir d'une série de tests cliniques imposés au patient par le chirurgien, des géométries réelles sont relevées (par radiographie par exemple) et les déplacements constatés par rapport à une posture normale sont interprétés pour en déduire des fonctions mathématiques régissant le comportement des espaces articulaires (corps intervertébraux) qui satisfont aux géométries relevées et ce, pour chaque liaison de deux vertèbres adjacentes. Cette manière de procéder se heurte rapidement à des blocages de calcul ou à des impossibilités de résolution car dans le cas d'une colonne vertébrale, il s'agit de traiter 17 liaisons successives d'un couple de corps vertébraux.

Un modèle numérique personalisé est aussi revelé dans le document: LAFAGE V. ET AL: "3D finite element simulation of Cotrel-Dubousset correction" COMPUTER AIDED SURGERY, vol. 9, no. 1-2, 2004, pages 17-25.

### OBJET DE L'INVENTION

La présente invention entend proposer une solution alternative beaucoup plus efficace, ne demandant qu'une capacité et un temps de calcul restreints pour personnaliser un modèle numérique de rachis par exemple, se prêtant ainsi de manière tout à fait avantageuse à la simulation pré ou per-opératoire d'un geste ou d'une stratégie chirurgicale.

### DESCRIPTION DETAILLEE DE L'INVENTION

A cet effet, l'invention a donc pour objet un procédé de simulation du comportement d'un ensemble de pièces osseuses articulées, notamment la colonne vertébrale d'un sujet comportent :
- une étape de construction d'un modèle géométrique tridimensionnel de cet ensemble à partir de données spécifiques de ce sujet dans une position de référence,
- une étape de personnalisation mécanique de ce modèle géométrique par particularisation d'au moins certaines des zones de liaison articulées des pièces osseuses, dans lequel procédé l'étape de personnalisation mécanique comporte :
   - une phase de personnalisation de zones critiques de liaison des pièces osseuses, dites zones jonctionnelles,
   - une phase d'acquisition de données relatives à l'ensemble de pièces osseuses articulées du sujet au cours d'au moins un test clinique de posture dans une position différente de la position de référence ou de mouvement à partir de cette position,
   - et une phase de caractérisation des paramètres mécaniques de ces zones jonctionnelles pour obtenir la reproduction par le modèle des données acquises lors du test clinique susdit.

Lesdites données peuvent être une forme, des paramètres de mouvement (trajectoire, vitesse, ...) accompagnées ou non d'une mesure de forces et ou d'efforts

L'une des caractéristiques importantes de l'invention réside dans cette phase de détermination des zones critiques de liaison des pièces osseuses de l'articulation considérée, autrement dit des zones jonctionnelles. Celles-ci sont déterminées au moyen d'un algorithme construit à partir de l'expertise clinique des chirurgiens. En effet, par exemple pour une scoliose, ces zones critiques sont repérées par la détection de paramètres particuliers dans le positionnement relatif adjacent de deux vertèbres. Ainsi, on s'attachera à repérer une certaine discontinuité soit dans la rotation d'une vertèbre par rapport à la vertèbre adjacente, soit dans son inclinaison lorsque l'on regarde le rachis de face. On rappellera par ailleurs que la construction du modèle géométrique tridimensionnel est une étape connue en elle-même et que plusieurs procédés permettent d'obtenir un résultat satisfaisant, ceci soit à partir de radiographies orthogonales d'un sujet, soit à partir de données tomographiques de ce dernier. Il faut indiquer également que le test clinique le plus courant appelé "bending" consiste à forcer une inclinaison latérale du sujet à droite et à gauche pour relever la forme de face du rachis dans ces deux inclinaisons.

Une fois le modèle numérique personnalisé ainsi construit, le procédé de simulation de l'invention consiste soit à appliquer sur ce modèle un ensemble de forces qui représente l'action d'un implant, soit à associer ce modèle de manière fonctionnelle à un modèle d'implant en fonction d'une stratégie d'insertion, à calculer la forme du modèle numérique qui en résulte et à la représenter graphiquement

Cet ensemble de forces ou cette association fonctionnelle sera représentatif de la stratégie opératoire adoptée. Par exemple, il existe plusieurs types de prothèses susceptibles d'être associées à une colonne vertébrale d'un sujet pour notamment corriger une scoliose.

L'une des chirurgies dite Cotrel-Dubousset consiste à fixer à certaines des vertèbres stratégiques de la colonne vertébrale, notamment les vertèbres des zones jonctionnelles et la vertèbre la plus décentrée (l'apex de la déformation) une tige qui possède une courbure différente de la courbure de la colonne appareillée, en général moins prononcée, cette courbure étant le reflet approximatif de la courbure que l'on veut imposer en final à la colonne. En effet, selon cette méthode, une fois que la tige est fixée le long du rachis dans des sortes de coussinets autorisant la rotation de la tige sur elle-même, on procède à sa rotation à 90° pour imposer à ce rachis d'une part de s'étendre sensiblement dans un plan sagittal et d'autre part de suivre la courbe de la tige dans un plan frontal. Lors de cette manipulation, on provoque des mouvements des vertèbres qui comportent des composantes en rotation de celles-ci. La chirurgie est ensuite poursuivie par la pose d'une seconde tige dont la courbure vient justement redresser les rotations induites par la première phase opératoire.

Le choix du chirurgien se traduit donc au moyen du système informatique destiné à la mise en oeuvre du procédé de l'invention par la commande d'application de forces soit de manière automatique sur des zones pré-établies par le programme de mise en oeuvre du procédé, soit en laissant la main au chirurgien quant au choix et à la détermination de la tige à mettre en oeuvre parmi une bibliothèque de tiges et des vertèbres concernées par l'attachement de cette tige à la colonne.

Le procédé de l'invention s'applique également lorsqu'on décide d'une autre stratégie opératoire telle que celle dite cintrage in-situ (CIS). Cette méthode consiste à lier chacune des vertèbres du rachis à une tige latérale et à procéder, au moyen de pinces adaptées, au cintrage de cette tige dans le plan frontal et dans le plan sagittal. Le chirurgien, comme précédemment, peut soit choisir un programme automatique de correction du modèle personnalisé réalisé par le programme mettant en oeuvre le procédé de l'invention et ce, à partir de pas de calculs eux-mêmes élaborés en tenant compte de l'expertise de certains praticiens de la méthode, soit en proposant au chirurgien le choix de la tige, de sa résistance, de sa longueur, et des différentes déformations et séquences de déformations qu'il peut lui faire subir, soit enfin de simplement suggérer la séquence des courbures successives à réaliser le long de la tige. De la même manière que précédemment, cette action sur la tige reliée à la colonne se traduit par l'application de forces qui agissent sur le modèle numérique et conduisent à sa déformation jusqu'à l'obtention de la forme voulue par le chirurgien.

Le procédé de l'invention permet donc une simulation pré-opératoire du geste chirurgical selon la stratégie adoptée, cette simulation pouvant varier selon les choix opérés par le chirurgien, ce dernier étant alors en présence de plusieurs résultats qui lui permettront d'adopter le geste opératoire qu'il appliquera compte tenu de la simulation du résultat qu'il aura pu observer et retenir.

Dans une variante plus raffinée du procédé de l'invention de simulation des résultats d'une stratégie opératoire, une phase consiste préalablement à la simulation du geste proprement dit, à appliquer sur le modèle numérique personnalisé un autre ensemble de forces statiques qui est représentatif de l'action du support du sujet lors de l'intervention chirurgicale. Il s'agit par exemple de simuler l'effet de la table sur le sujet si par exemple ce dernier repose à plat ventre sur cette table, les points fixes étant, du point de vue de la colonne vertébrale, le bassin et la cage thoracique, même si en réalité cette dernière se comporte comme un ressort. Les forces sont choisies en fonction des données personnelles du sujet que peuvent être son poids sa taille et l'emplacement de ses différents centres de masse s'ils sont connus. La simulation de l'intervention selon la stratégie opératoire choisie s'effectue donc sur le modèle numérisé déjà modifié en forme par ce premier champ de forces statiques et la simulation du résultat final sera obtenue en supprimant ce champ de forces pour apprécier ce résultat alors que le sujet est en position debout.

On indiquera que l'un des avantages importants du procédé de l'invention, tenant à la procédure de personnalisation du modèle numérisé, permet de réaliser rapidement cette personnalisation qui dans sa réalisation correspond bien à une approche clinique du désordre anatomique à réparer.

La description donnée ci-dessus concerne principalement une illustration du procédé de l'invention appliqué à la chirurgie correctrice du rachis. Ce procédé n'est cependant pas limité à cette chirurgie. Il concerne également d'autres articulations complexes telles que le genou ou l'épaule. Dans ces applications où il s'agit de caractériser le comportement d'un ensemble de ligaments et d'autres éléments de liaison organisés de manière complexe, la détermination des zones critiques de ces articulations résulte de l'expertise des chirurgiens spécialisés et sont traduites par un programme de leur détermination qui procède à un examen du modèle personnalisé de l'articulation en fonction des critères spécifiques retenus par les cliniciens. Le ou les tests cliniques pris en compte dans le procédé seront également sécifiques de l'articulation concernée et en relation étroite avec l'expérience des praticiens. Ils seront, pour le genou par exemple, des tests visant à estimer les laxités ligamentaires.

## Revendications

1. Procédé de simulation du comportement d'un ensemble de pièces osseuses articulées comprenant :
- une étape de construction d'un modèle géométrique tridimensionnel de l'ensemble à partir de données spécifiques de ce sujet dans une position de référence,
- une étape de personnalisation mécanique de ce modèle géométrique par particularisation d'au moins certaines des zones de liaison des pièces osseuses,
**caractérisé en ce que** l'étape de personnalisation mécanique comporte :
• une phase de détermination de zones critiques de liaison des pièces osseuses, dites zones jonctionnelles,
• une phase d'acquisition de données relatives à l'ensemble de pièces osseuses articulées du sujet au cours d'au moins un test clinique de posture dans une position différente de la position de référence ou de mouvement à partir de cette position,
• et une phase de caractérisation des paramètres mécaniques de ces zones jonctionnelles pour obtenir la reproduction par le modèle de la forme acquise par l'ensemble susdit lors du test clinique.

2. Procédé selon la revendication 1, **caractérisé en ce que** la phase de détermination de zones critiques est réalisée par la détection de paramètres particuliers du positionnement relatif de deux pièces osseuses adjacentes.

3. Procédé selon la revendication 1 et la revendication 2, **caractérisé en ce qu'**il consiste soit à appliquer sur ce modèle un ensemble de forces qui représente l'action d'un implant, soit à associer ce modèle de manière fonctionnelle à un modèle d'implant en fonction d'une stratégie d'insertion, à calculer la forme du modèle numérique qui en résulte et à la représenter graphiquement

4. Procédé selon la revendication 3, **caractérisé en ce qu'**il consiste à appliquer sur le modèle numérique personnalisé un autre ensemble de forces, statiques, représentant l'action d'un support du sujet lors de l'intervention et à supprimer cette application avant la représentation graphique du résultat final.

5. Procédé selon la revendication 3 ou la revendication 4, **caractérisé en ce que** l'ensemble de forces appartient à une banque de données d'où elles sont extraites en fonction de la méthode chirurgicale adoptée et dans cette méthode, de la stratégie opératoire retenue.

6. Procédé selon la revendication 5, **caractérisé en ce que** la méthode chirurgicale adoptée est la méthode "Coterel-Dubousset".

7. Procédé selon la revendication 5, **caractérisé en ce que** la méthode adoptée est celle du cintrage de tige in-situ (CIS).

## Claims

1. A method of simulating the behavior of an articulated set of bones comprising:
· a construction step of constructing a three-dimensional geometrical model of the set from data that is specific to the subject in a reference position; and
· a mechanical customization step of customizing the geometrical model by detailing at least some of the connection areas of the bone parts,
the method being **characterized in that** the mechanical customization step includes:
· a stage of customizing critical connection areas for the bone parts, referred to as junction areas;
• a data acquisition stage of acquiring data concerning the articulated bone set of the subject during at least one clinical test of posture in a position different from the reference position or a clinical test of movement starting from said reference position; and
• a characterization stage for characterizing the mechanical parameters of said junction areas in order to cause the model to reproduce the shape acquired by the above-mentioned set during the clinical test.

2. A method according to claim 1, **characterized in that** the stage of determining critical connection areas consists in detecting specific parameters in the relative adjacent positioning of two vertebrae.

3. A method according to claims 1 and 2, **characterized in that** it consists either in subjecting the model to a set of forces representing the action of an implant, or in combining the model in functional manner with an implant model depending on insertion strategy, in order to calculate the shape of the digital model that results therefrom and in order to represent it graphically.

4. A method according to claim 3, **characterized in that** it consists in applying another set of static forces to the customized digital model, which other set of static forces represents supporting the subject during surgery and in removing said forces before representing the final result graphically.

5. A method according to claims 3 and 4, **characterized in that** the set of forces belong to a database from which they are extracted depending on the surgical method adopted and in said method, on the final operating strategy.

6. A method according to claim 5, **characterized in that** the surgical method adopted is the method known by the name Cotrel-Dubousset.

7. A method according to claim 5, **characterized in that** the method adopted is the in situ bending of the rod.

## Patentansprüche

1. Verfahren zur Simulation des Verhaltens einer Gruppe von Gelenkknochenteilen, umfassend:
- einen Schritt der Herstellung eines dreidimensionalen geometrischen Modells der Gruppe anhand von spezifischen Daten dieser Person in einer Referenzposition,
- einen Schritt der mechanischen Personalisierung dieses geometrischen Modells durch Partikularisierung zumindest einiger der Verbindungszonen der Knochenteile,
**dadurch gekennzeichnet, dass** der Schritt der mechanischen Personalisierung umfasst:
• eine Phase der Bestimmung der kritischen Verbindungszonen der Knochenteile, sogenannter Junctura-Zonen,
• eine Phase der Erfassung von Daten bezüglich der Gruppe von Gelenkknochenteilen der Person während mindestens eines klinischen Haltungstests in einer anderen Position als der Referenzposition oder während einer Bewegung aus dieser Position,
• und eine Phase der Charakterisierung mechanischer Parameter dieser Junctura-Zonen, um mittels des Modells die Reproduktion der Form zu erhalten, die mittels der oben genannten Gruppe während des klinischen Tests erfasst wurde.

2. Verfahren nach Anspruch 1, **dadurch gekennzeichnet, dass** die Phase der Bestimmung der kritischen Zonen durch das Erfassen besonderer Parameter der relativen Positionierung von zwei angrenzenden Knochenteilen realisiert wird.

3. Verfahren nach Anspruch 1 und Anspruch 2, **dadurch gekennzeichnet, dass** es entweder darin besteht, eine Gruppe von Kräften, die die Wirkung eines Implantats darstellt, auf dieses Modell auszuüben, oder darin, dieses Modell auf funktionelle Weise mit einem Implantatmodell in Abhängigkeit von einer Einsetzstrategie zu verbinden und die Form des digitalen Modells, das sich daraus ergibt, zu berechnen und graphisch darzustellen.

4. Verfahren nach Anspruch 3, **dadurch gekennzeichnet, dass** es darin besteht, auf das personalisierte Digitalmodell eine weitere Gruppe von Kräften auszuüben, nämlich statische Kräfte, die die Wirkung einer Haltevorrichtung zum Halten der Person während des Eingriffs darstellen, und darin, dieses Ausüben vor der graphischen Darstellung des Endergebnisses zu unterdrücken.

5. Verfahren nach Anspruch 3 oder Anspruch 4, **dadurch gekennzeichnet, dass** die Gruppe von Kräften zu einer Datenbank gehört, aus der sie in Abhängigkeit von der angewandten chirurgischen Methode und innerhalb dieser Methode von der gewählten Operationsstrategie abgerufen werden.

6. Verfahren nach Anspruch 5, **dadurch gekennzeichnet, dass** die angewandte chirurgische Methode die Methode von "Cotrel-Dubousset" ist.

7. Verfahren nach Anspruch 5, **dadurch gekennzeichnet, dass** die angewandte Methode die des In-situ-Verbiegens eines Stabes (CIS) ist.
